# EUROPÄISCHE PATENTSCHRIFT

(11) **EP 3 909 733 B1**
(45) Veröffentlichungstag und Bekanntmachung des Hinweises auf die Patenterteilung: **24.09.2025**
(21) Anmeldenummer: 21167578.0
(22) Anmeldetag: 09.04.2021
(51) Int. Cl.: B27N 3/18, B27N 5/00, B27D 1/06, B27D 1/08, B27D 3/04, B27N 1/00, B27N 3/04, B27N 7/00, B29C 53/28, B31F 1/28

(54) **VERFAHREN UND SYSTEM ZUR HERSTELLUNG EINER DREIDIMENSIONAL VERFORMTEN PLATTE**
METHOD AND SYSTEM FOR PRODUCING A THREE-DIMENSIONALLY DEFORMED PLATE
PROCÉDÉ ET SYSTÈME DE FABRICATION D'UNE PLAQUE DÉFORMÉE TRIDIMENSIONNELLE

(30) Priorität: 15.05.2020 DE 102020113284
(43) Veröffentlichungstag der Anmeldung: 17.11.2021
(73) Patentinhaber: Homann Holzwerkstoffe GmbH, 81925 München (DE)
(72) Erfinder: HOMANN, Fritz, 81925 München (DE); WESSEL, Micha, 66663 Merzig (DE); WAHLEN, Markus, 57480 Apach (FR); SCHULTE, Matthias, 66740 Saarlouis (DE)
(74) Vertreter: Brinkmann & Partner

(56) Entgegenhaltungen:
- EP-A1- 3 275 611
- EP-A1- 3 456 498
- WO-A1-2011/034479
- CA-C- 2 988 159
- US-A- 5 160 400

## Beschreibung

Die Erfindung betrifft ein Verfahren zur Herstellung einer dreidimensional verformten Platte aus einem Holzfaser-Werkstoff. Zudem betrifft die Erfindung ein System zur Herstellung einer dreidimensional verformten Platte aus einem Holzfaser-Werkstoff nach dem Verfahren.

Dreidimensional verformte Platten aus einem Holzfaser-Werkstoff sind aus dem Stand der Technik an sich bekannt. Sie dienen beispielsweise als Kernschicht für eine Sandwichplatte. Eine derartige Sandwichplatte kann beispielsweise als Möbelplatte oder als Türblatt Verwendung finden. Dabei besteht eine solche Sandwichplatte aus einer Kernschicht, die wenigstens einseitig, typischerweise aber zweiseitig mit einer Deckschicht ausgerüstet ist. Die Kernschicht kann aus einer dreidimensional verformten Platte gebildet sein, wohingegen es sich bei den Deckschichten in der Regel um ebene Platten handelt.

Eine Kernschicht in diesem Sinne offenbart beispielsweise die EP 2 660 408 B1. Diese vorbekannte Kernschicht weist Zick-Zack-förmig ausgebildete Holzemente auf, die miteinander verbunden, vorzugweise miteinander verklebt sind. Dabei kommen zur Ausbildung der Kernschicht eine Vielzahl solcher Holzelemente zum Einsatz, die jeweils plattenförmige Bereiche aufweisen, die Zick-Zack-förmig angeordnet sind, wobei ein Zick-Bereich eines Holzelements mit einem angrenzenden Zack-Bereich desselben Holzelements eine gemeinsame Kante zwischen sich ausbilden. Die kantenbenachbarten Holzelemente bilden Kreuzungspunkte zwischen sich aus, in denen benachbarte Holzelemente miteinander verbunden sind.

Eine aus Holzelementen gebildete Kernschicht ist gleichfalls aus der EP 3 066 272 B1 bekannt. Auch gemäß diesem Stand der Technik sind die Holzelemente Zick-Zack-förmig ausgebildet, wobei ein Zick-Bereich an einen Zack-Bereich unter Zwischenordnung einer gemeinsamen Kante anschließt, allerdings können sowohl die Zick- als auch die Zack-Bereiche ebenso wie die gemeinsame Kante jeweils gekrümmt ausgebildet sein, wodurch sich ein wellenförmiger Verlauf ergibt.

CA2988159C offenbart ein Verfahren zur Herstellung einer dreidimensional verformten Platte aus einem Holzfaser-Werkstoff und Einbringen eines Abschnitts einer Ausgangsplatte zwischen zwei Walzen einer Formstation, wobei die Walzen jeweils eine Profilierung der Außenoberfläche aufweisen, sodass die Ausgangsplatte abschnittsweise in eine dreidimensional verformte Platte mit umgeformt wird.

Den beiden vorbenannten Druckschriften EP 2 660 408 B1 und EP 3 066 272 B1 ist gemein, dass zur Ausbildung einer Kernschicht jeweils eine Mehrzahl von Holzelementen zum Einsatz kommen, die zur Ausbildung einer Kernschicht regellos anzuordnen und miteinander dauerhaft zu verbinden sind. Im Unterschied hierzu offenbart die EP 3 456 498 A1 ein Verfahren zur Herstellung einer dreidimensional verformten Platte aus einem Holzfaser-Werkstoff, bei dem eine vorgefertigte, ebene MDF-Platte als Ausgangsplatte verwendet wird, die dann im Weiteren in einer Formstation in eine wellenförmig ausgebildete Platte umgeformt wird. Dabei erfolgt die Verfahrensdurchführung kontinuierlich, und es steht am Ende der Umformung eine einstückig ausgebildete Wellenplatte, die auch als Kernschicht für eine Sandwichplatte Verwendung finden kann.

Die nach dem Stand der Technik gemäß der EP 3 456 498 A1 vorgesehene Formstation zur Umformung der ebenen MDF-Platte in eine Wellenplatte verfügt über ein Walzenpaar mit zwei Walzen, die jeweils außenseitig über eine wellenförmige Profilierung verfügen. Diese wellenförmige Profilierung der Walzen sorgt dafür, dass die der Formstation aufgegebene ebene Platte in eine gewellt ausgebildete Platte umgeformt wird. Dabei ist das entstehende Wellenmuster sinusförmig, das heißt es ergeben sich gleich ausgebildete Halbwellen, wobei auf eine positive Halbwelle eine negative Halbwelle nachfolgt usw.

Das nach der EP 3 456 498 A1 vorbekannte Verfahren betrifft ein gattungsgemäßes Verfahren und hat sich im alltäglichen Praxiseinsatz bewährt. Es besteht gleichwohl Verbesserungsbedarf, da sich herausgestellt hat, dass die vorbekannte wellenförmige Ausgestaltung der dreidimensional verformten Platte nicht für sämtliche Anwendungsbereiche gleichermaßen gut geeignet ist. Es ist deshalb die **Aufgabe** der Erfindung, ein Verfahren sowie ein System zur Herstellung einer dreidimensional verformten Platte anzugeben, die eine einfache und kostengünstige Herstellung einer dreidimensional verformten Platte ermöglichen, wobei je nach späterem Anwendungsfall unterschiedliche Plattenformgebungen in einfacher Weise ermöglicht sein sollen.

Zur **Lösung** dieser Aufgabe wird mit der Erfindung vorgeschlagen, ein Verfahren zur Herstellung einer dreidimensional verformten Platte aus einem Holzfaser-Werkstoff mit folgenden Schritten
- Bereitstellen einer vorgefertigten, ebenen Holzfaser-Werkstoff-Platte als Ausgangsplatte,
- abschnittsweises Vorwärmen der Ausgangsplatte,
- Benetzen eines vorgewärmten Abschnitts der Ausgangsplatte mit einem zerstäubten Flüssigkeitsgemisch aus Wasser und einem Trennmittel,
- Einbringen eines vorgewärmten und mit einem Flüssigkeitsgemisch aus Wasser und einem Trennmittel benetzten Abschnitt der Ausgangsplatte zwischen zwei Walzen einer Formstation, wobei die Walzen jeweils ein in Umfangsrichtung wellenförmig ausgebildete Profilierung der Außenoberfläche bereitstellen, sodass die Ausgangsplatte abschnittsweise in eine Platte mit Wellenform umgeformt wird,
- wobei Walzen verwendet werden, deren jeweilige Profilierung über in Umfangsrichtung aufeinander nachfolgende Halbwellen verfügt, die zumindest teilweise eine in Umfangsrichtung unterschiedliche Erstreckung aufweisen.

Ausgangspunkt des erfindungsgemäßen Verfahrens ist eine vorgefertigte, ebene Holzfaser-Werkstoff-Platte. Diese dient als Ausgangsplatte. Dabei kann die Holzfaser-Werkstoff-Platte ein Gelege aus beleimten, vorverdichteten Fasern als auch eine vorgepresste Faserplatte sein. Bevorzugterweise findet als Holzfaser-Werkstoff-Platte eine MDF-Platte Verwendung. Insbesondere bei einer vorgepressten Faserplatte können je nach späterer Verwendung der nach dem erfindungsgemäßen Verfahren hergestellten Wellenplatte unterschiedliche Dichten zum Einsatz kommen. Von erfindungswesentlicher Bedeutung ist allein, dass als Ausgangsplatte zur Verfahrensdurchführung eine ebene Platte aus einem Holzfaser-Werkstoff zum Einsatz kommt.

"Holzfaser-Werkstoff" im Sinne der Erfindung meint allgemein einen Werkstoff aus Ligno-Zellulosehaltigen Fasern oder Spänen, der vorzugsweise auch Holzfasern oder -späne aufweist, das heißt diese enthält. Es können auch Fasern oder Späne aus anderen Materialien vorliegen und mit den Holzfasern oder -spänen vermischt oder vermengt sein. Es liegen ganz allgemein Ligno-Zellulosehaltige Fasern oder Späne vor, entweder als Matte, als Gelege oder als vorgepresste Platte. Dabei können die Fasern oder Späne bei einer gestreuten Matte oder einem Gelege beleimt oder unbeleimt vorliegen. Insofern ist "Platte" im Sinne der Erfindung auch eine aus Ligno-Zellulosehaltige Fasern oder Spänen gestreute Matte oder ein Gelege aus solchen Fasern oder Spänen. Entscheidend für die Verfahrensdurchführung ist allein, dass eine aus Ligno-Zellulosehaltigen Fasern oder Spänen gestreute Matte, ein vorbereitetes Gelege oder eine fest verpresste Platte als Halbzeug vorliegt, das ebenflächig ausgebildet ist und als Ausgangspunkt für die erfindungsgemäße Verfahrensdurchführung dient. Insofern ist die Erfindung nicht auf eine aus Holzfasern allein gebildete, fest verpresste Platte als Ausgangsplatte beschränkt.

Die Ausgangsplatte wird zunächst einmal vorgewärmt. Dies erfolgt abschnittsweise, indem die Platte kontinuierlich vorwärts bewegt an einer Heizeinrichtung vorbeigeführt wird. Der sich in Überdeckung mit der Heizeinrichtung befindende Abschnitt der Arbeitsplatte wird infolgedessen vorgewärmt. Als Heizeinrichtungen können beispielsweise Infrarotstrahler zum Einsatz kommen, die die Ausgangsplatte sowohl von der einen als auch von der anderen Seite bestrahlen, womit eine sowohl oberseitige als auch unterseitige Erwärmung der Ausgangsplatte stattfindet. Als Heizeinrichtungen können alternativ auch Mikrowelleneinrichtungen, Kontaktwärmeübertrager und/oder dergleichen Verwendung finden. Entscheidend ist, dass mittels der Heizeinrichtung ein Vorwärmen der Ausgangsplatte auf ein hinreichendes Temperaturniveau stattfinden kann.

Das Vorwärmen der Ausgangsplatte dient der Vorbereitung des nächsten Verfahrensschritts. Demgemäß ist vorgesehen, dass die Ausgangsplatte benetzt wird, und zwar mit einem zerstäubten Flüssigkeitsgemisch aus Wasser und einem Trennmittel. Infolge der Zerstäubung entsteht ein Aerosol, das sich auf den vorgewärmten Abschnitt der Ausgangsplatte niederlegt. Es findet insoweit eine Benetzung des vorgewärmten Abschnitts der Ausgangsplatte statt.

Als zerstäubtes Flüssigkeitsgemisch kommt ein Gemisch aus Wasser und Trennmittel zum Einsatz. Das Wasser dient im weiteren Verfahrensgang dazu, Wasserdampf auszubilden, der für eine spätere Verformung der Ausgangsplatte benötigt wird. Sinn und Zweck des Trennmittels ist es, dafür Sorge zu tragen, dass die umzuformende Arbeitsplatte nicht an den Walzen der Formstation haften bleibt. Als Mischungsverhältnis von Wasser zu Trennmittel kann beispielsweise ein Mischungsverhältnis im Bereich von 99 : 1 bis 1 : 99, vorzugsweise im Bereich von 99 : 1 bis 50 : 50, noch mehr bevorzugt im Bereich von 99 : 1 bis 90 : 10 gewählt werden.

Die Vorwärmung der Ausgangsplatte dient insbesondere dazu, dass das Flüssigkeitsgemisch homogen auf den jeweiligen Oberflächen der Ausgangsplatte verteilt wird. Zudem wird durch die Vorwärmung erreicht, dass das auf die Arbeitsplatte aufgebrachte Flüssigkeitsgemisch schon eine bestimmte Vorwärmung erreicht, sodass sichergestellt ist, dass ein Verdampfen des Wassers in der nachfolgenden Formstation auch sicher gewährleistet ist.

Je nach eingesetzten Heizeinrichtungen kann auch vorgesehen sein, dass das abschnittsweise Vorwärmen der Ausgangsplatte und das abschnittsweise Benetzen der Ausgangsplatte in einem Verfahrensschritt stattfinden. Entscheidend ist, dass eine homogene Verteilung des Flüssigkeitsgemischs auf der Ausgangsplatte stattfindet, sodass einerseits eine homogene Trennmittelverteilung erreicht ist sowie andererseits, dass das aufgebrachte Wasser eine solche Vortemperatur erreicht, dass die im Weiteren vorgesehene Verdampfung des Wassers sicher gewährleistet ist. Zudem gewährleistet die Vorwärmung eine vollständige Durchwärmung der Holzfaser-Werkstoff-Platte bis in die Mittelschicht des Materials der Holzfaser-Werkstoff-Platte. Diese Erwärmung trägt zur Erweichung des Faserverbundes bei und unterstützt den Verformungsprozess.

Der gemäß der vorherigen Verfahrensschritte vorgewärmte und mit einem Flüssigkeitsgemisch aus Wasser und einem Trennmittel benetzte Abschnitt der Ausgangsplatte wird alsdann zwischen zwei Walzen einer Formstation geführt. Die Walzen sind beabstandet voneinander angeordnet und bilden einen Spalt zwischen sich aus, dessen Spaltmaß geringer ist als die Dicke der Ausgangsplatte. Die Ausgangsplatte wird mithin zwischen den beiden Walzen verdichtet und gleichzeitig umgeformt. Dabei stellen die Walzen jeweils eine in Umfangsrichtung wellenförmig ausgebildete Profilierung der Außenoberfläche bereit, sodass die Ausgangsplatte in eine Platte mit Wellenform umgeformt wird. Dabei wird immer derjenige Abschnitt der Arbeitsplatte umgeformt, der sich gerade zwischen den Walzen der Formstation befindet. Da das Verfahren insgesamt kontinuierlich durchgeführt wird, ergibt sich auch eine abschnittsweise kontinuierliche Umformung der ebenen Ausgangsplatte in eine gewellt umgeformte Platte.

Es ist von erfindungswesentlicher Bedeutung, dass Walzen verwendet werden, deren jeweilige Profilierung über in Umfangsrichtung aufeinander nachfolgende Halbwellen verfügt, die zumindest teilweise eine in Umfangsrichtung unterschiedliche Erstreckung aufweisen. Die je Halbwelle vorgesehene halbe Periodendauer variiert also, wobei mindestens zwei unterschiedliche halbe Periodendauern vorgesehen sind. Demgemäß ist also vorgesehen, dass das jeweilige Profil der Walzen Halbwellen bereitstellt, die unterschiedlich lang ausgebildet sind, das heißt eine in Umfangsrichtung unterschiedliche Erstreckung aufweisen. Im Ergebnis dieser Ausgestaltung steht, dass die umgeformte Ausgangsplatte zwar wellenförmig ist, dass die einzelnen Wellenberge bzw. Wellentäler aber eine unterschiedliche Erstreckung in Längsrichtung der Platte aufweisen. Es ergibt sich so eine von der sinusförmigen Wellenausgestaltung unterschiedliche Wellenausgestaltungsform. Dies erbringt den Vorteil, dass eine Wellenform ausgebildet werden kann, die optimierter an die im späteren Verwendungsfall auftretenden Kraftbeaufschlagungen angepasst ist. Es ist insbesondere möglich, eine verbesserte Krafteinleitung in die Platte zu realisieren. Zudem erlaubt es die unterschiedliche Erstreckung der Halbwellen in Längsrichtung der Platte, dass etwaige mit der Platte zu verbindende Funktionselemente unter dem Gesichtspunkt der verbesserten Krafteinleitung optimierter an der Platte angeordnet werden können. Funktionselemente in diesem Sinne sind insbesondere Befestigungsmittel, wie zum Beispiel Schrauben, Muttern oder dergleichen, aber auch Verbindungsmittel, Anschlusselemente, Halter und/oder dergleichen.

Die erfindungsgemäße Ausgestaltung eignet sich insbesondere für die spätere Verwendung der umgeformten Platte als Kernschicht einer Sandwichplatte, beispielsweise einer Möbelplatte oder eines Türblatts. Denn die erfindungsgemäße Ausgestaltung macht es möglich, die für eine verwendungstypische Nutzung eines Türblatts und/oder einer Möbelplatte vorzusehenden Funktionselemente an den dafür vorgesehenen Stellen der verformten Platte anzuordnen bzw. durch die Wellenform entsprechende Bereiche zu schaffen, die für eine Anordnung solcher Funktionselemente besonders geeignet sind. Dies vereinfacht die spätere Verwendung und erbringt zudem Einsatzmöglichkeiten für die gewellte Platte, die ansonsten in dieser Form nicht gegeben wären.

Zudem ist es möglich unterschiedliche ausgebildete Walzen vorzuhalten, die je Verformungsaufgabe in der Formstation zu Anwendung kommen. Dies ermöglicht eine wahlweise unterschiedliche Ausgestaltung von Plattenformgebungen, so dass ein erweitertes Anwendungsspektrum gegeben ist.

Gemäß einem weiteren Merkmal der Erfindung ist vorgesehen, dass Walzen verwendet werden, deren jeweilige Profilierung über Halbwellen verfügt, die zur Ausbildung einer plattenseitigen im Wesentlichen ebenen Anlagefläche zumindest abschnittsweise im Wesentlichen plan ausgebildet sind.

Gemäß diesem Merkmal verfügen zumindest einige der Halbwellen über eine streckenweise im Wesentlichen plane Ausgestaltung. Hierdurch wird eine im Wesentlichen ebene Anlagefläche geschaffen, die es bei einer späteren Verwendung der verformten Platte ermöglicht, Anschlusselemente bzw. Funktionselemente für eine kraftoptimierte Einleitung vollflächig abgestützt an der umgeformten Platte anordnen zu können. Dies ist bei einer rein sinusförmigen Wellenausgestaltung, wie sie aus dem Stand der Technik beispielsweise gemäß der EP 3 456 498 A1 bekannt ist, nicht möglich.

Die im Wesentlichen plane Ausgestaltung kann beispielsweise dadurch erreicht werden, dass eine Halbwelle über ein Plateau verfügt. Dabei kann die Halbwelle als positive Halbwelle, das heißt als Wellenberg oder als negative Halbwelle, das heißt als Wellental ausgebildet sein. Das von der Halbwelle zur Verfügung gestellte Plateau ist bevorzugter Weise im Wesentlichen planparallel zur Nulllinie ausgerichtet, womit das Plateau plattenseitig zu einer Anlagefläche führt, die im Wesentlichen planparallel zur Mittellinie der Platte verläuft. Dies gestattet eine zur Mittellinie ausgerichtete Anordnung von Funktionselementen an der Platte.

In diesem Zusammenhang wird gemäß einem weiteren Merkmal der Erfindung vorgeschlagen, dass als Funktionselement auch ein Leistenkörper oder dergleichen Verwendung finden kann. Ein solcher Leistenkörper ist quer zur Längsrichtung der Platte auszurichten und innerhalb eines Wellentals anzuordnen. Ein solcher Leistenkörper erstreckt sich dann innerhalb dieses Wellentals, wobei eine im Wesentlichen plane Ausgestaltung des Wellentals den Vorteil mit sich bringt, dass der Leistenkörper unter Ausbildung eines vollflächigen Kontakts zur Platte mit dieser verbunden werden kann. Dies gestattet es, in einfacher Weise planausgebildete Leistenkörper verwenden zu können, womit es nicht erforderlich ist, Leistenkörper zu verwenden, die in einem separaten Arbeitsschritt an eine bestimmte Profilierung der Platte anzupassen sind.

Alternativ ist gemäß einem weiteren Merkmal der Erfindung vorgesehen, dass Walzen verwendet werden, deren jeweilige Profilierung über Halbwellen verfügt, die zur Ausbildung einer plattenseitigen im Wesentlichen gekrümmten Anlagefläche zumindest abschnittsweise im Wesentlichen konkav oder konvex ausgebildet sind. Es ist so eine von der Plateau-Ausgestaltung abweichende Formgebung ermöglicht, die insbesondere dazu dient, entsprechend hierzu korrespondierend ausgebildete Funktionselemente lageoptimiert aufnehmen zu können. Es können so auch in ihrer geometrischen Anordnung unterschiedlichst ausgebildete Fixierpunkte geschaffen werden, die bei einer späteren Verwendung der dreidimensional verformten Platte als Kernschicht einer Sandwichplatte dazu dienen können, eine verbesserte Verbindung zu den Deckschichten einer Sandwichplatte auszubilden.

Hinsichtlich der geometrischen Ausgestaltung der dreidimensional verformten Platte sind grundsätzlich unterschiedlichste Formen denkbar. Diese können mathematisch beispielsweise durch eine entsprechend ausgebildete Oberschwingung einer Sinuswelle dargestellt werden. Erfindungswesentlich ist deshalb allein, dass mit der Erfindung eine Ausgestaltung vorgeschlagen wird, die insofern von einer sinusförmig ausgestalteten Wellenform abweicht, als dass zumindest zwei Halbwellentypen vorgesehen sind, die eine in Walzenumfangsrichtung unterschiedliche Erstreckung aufweisen, mithin eine unterschiedliche halbe Periodendauer bereitstellen. Dabei ist die Erfindung nicht auf die Ausbildung nur zwei unterschiedlicher Halbwellen beschränkt. Es kann vielmehr eine Mehrzahl von unterschiedlichen Halbwellen vorgesehen sein, die sich auch nach Belieben in unterschiedlicher Reihenfolge aneinander anschließen können. Dabei können die einzelnen Halbwellen im Wesentlichen eben ausgebildete Anlageflächen, im Wesentlichen gekrümmt ausgebildete Anlageflächen oder sonst wie ausgebildete Anlageflächen bereitstellen. In vorteilhafter Weise wird es hierdurch möglich, eine mit Blick auf den späteren Verwendungsfall solche Ausgestaltung bereitzustellen, die eine optimierte Kraftverteilung und/oder Aufnahme ermöglicht, und zwar sowohl entweder in Alleinverwendung als gewellte Platte oder in einer kombinierten Verwendung mit Deckschichten als Sandwichplatte.

Gemäß einem weiteren Merkmal der Erfindung ist vorgesehen, dass Walzen verwendet werden, deren jeweilige Profilierung über ausschließlich negative oder positive Halbwellen verfügt. Demgemäß sieht die Profilierung entweder nur negative oder nur positive Halbwellen vor. Diese reihen sich in Umfangsrichtung aufeinander nachfolgend an, wobei einige der Halbwellen eine in Umfangsrichtung im Vergleich zu den anderen Halbwellen unterschiedliche Erstreckung aufweisen.

Alternativ ist gemäß einem weiteren Merkmal der Erfindung vorgesehen, dass ausschließlich Walzen verwendet werden, deren Profilierung über in Umfangsrichtung alternierend aufeinander nachfolgende positive und negative Halbwellen verfügt. Dementsprechend kommt eine Wellenprofilierung zum Einsatz, die über Wellenberge und Wellentäler verfügt, die sich in Längsrichtung der Platte, das heißt in Umfangsrichtung der Walzen aufeinander nachfolgend anschließen. Dabei sind in Entsprechung der erfindungsgemäßen Ausgestaltung zumindest einige dieser Halbwellen in Umfangsrichtung gestreckt ausgebildet, sodass entsprechende plattenseitige Anlageflächen zur Anordnung insbesondere von Funktionselementen ausgebildet werden können.

Gemäß einem weiteren Merkmal der Erfindung ist vorgesehen, dass Walzen verwendet werden, deren jeweilige Profilierung über zwei unterschiedliche Halbwellenausgestaltungen verfügt, wobei auf drei Halbwellen einer ersten Halbwellenausgestaltung eine Halbwelle einer zweiten Halbwellenausgestaltung nachfolgt.

Gemäß dieser erfindungsgemäßen Weiterbildung sind zumindest zwei unterschiedliche Halbwellenausgestaltungen vorgesehen. Es sind demnach ein erster Halbwellentyp sowie ein zweiter Halbwellentyp vorgesehen. Dabei kann beispielsweise der zweite Halbwellentyp ein solcher sein, der im Unterschied zum ersten Halbwellentyp eine in Umfangsrichtung der Walzen längere Erstreckung aufweist. Im Ergebnis dieser Ausgestaltung ergibt sich plattenseitig eine Ausbildung, dergemäß auf eine bestimmte Anzahl kürzerer Halbwellen, das heißt Halbwellen der ersten Ausführungsform Halbwellen der zweiten Ausführungsform nachfolgen, gefolgt dann wieder von Halbwellen der ersten Ausführungsform usw. Gemäß einem besonderen Vorschlag der Erfindung wird in diesem Zusammenhang vorgeschlagen, dass auf drei Halbwellen einer ersten Ausführungsform eine Halbwelle einer zweiten Ausführungsform folgt. Es ergibt sich demnach ein Muster von drei, eins, drei, eins usw., wobei die drei Halbwellen immer eine Halbwelle des ersten Typs darstellen und die eingeschlossene eine Halbwelle immer eine solche ist des zweiten Typs.

Gemäß einem weiteren Merkmal der Erfindung ist vorgesehen, dass eine Holzfaser-Werkstoff-Platte mit einem Flächengewicht von 1,0 kg/m² bis 3,0 kg/m² verwendet wird. Die Verwendung einer solchen Holzfaser-Werkstoff-Platte hat den Vorteil, dass eine hinreichende Stabilität bei gleichzeitig verringertem Gesamtgewicht gegeben ist, sodass sich die Umformung einer solchen Holzfaser-Werkstoff-Platte insbesondere dazu eignet, eine verformte Platte herzustellen, die als Kernschicht für Sandwichplatten insbesondere für den Möbelbau geeignet ist.

Gemäß einem weiteren Merkmal der Erfindung ist vorgesehen, dass eine Holzfaser-Werkstoff-Platte mit einer Dicke von 1 mm bis 3 mm, vorzugsweise von 2 mm verwendet wird. Im Zuge der erfindungsgemäßen Verfahrensdurchführung ergibt sich eine Verdichtung der Ausgangsplatte von mindestens 30 %.

Gemäß einem weiteren Merkmal der Erfindung ist vorgesehen, dass die Verformung bei einer Temperatur im Bereich von 200 °C bis 300 °C, vorzugweise von 200 °C bis 260 °C, noch mehr bevorzugt von 200 °C bis 240 °C und am meisten bevorzugt von 220 °C durchgeführt wird.

Der Temperatureintrag bei der Umformung erfolgt, um das zuvor aufgebrachte Flüssigkeitsgemisch aus Wasser und einem Trennmittel zum Verdampfen zu bringen. Die im Moment der Verformung oberseitig bzw. unterseitig an der Platte anliegenden Walzen verhindern, dass der durch Aufheizung entstehende Wasserdampf nach oben bzw. nach unten austreten kann. Er wird mithin in das Plattenmaterial hineingezwungen. Hier kommt es zu einer Aufweichung des Materials, was es dann ermöglicht, die vorgefertigte ebene Ausgangsplatte in schon vorbeschriebener Weise in eine Wellenplatte umzuformen. Dabei bewirkt der Wasserdampf im Material der Ausgangsplatte zweierlei. Zum einen wird das im Holzfaser-Werkstoff befindliche Lignin aktiviert und zum anderen kommt es zur Aktivierung des bei der Herstellung der vorgefertigten MDF-Platte nicht vollständig ausgehärteten Restbindemittels. Bei einer abschließenden Abkühlung der verformten Platte, die sich nach einem Verlassen der Formstation ergibt, härten das in der Formstation aktivierte Lignin sowie das aktivierte Restbindemittel aus, sodass die verformte Struktur der Platte aufrechterhalten bleibt, und zwar dauerhaft.

Zur Erzielung des vorgeschriebenen Effekts ist die Temperatur entsprechend auszuwählen, weshalb die vorstehend vorgeschlagenen Temperaturbereiche zu wählen sind. Dabei ist natürlich darauf zu achten, dass es nicht infolge eines zu hohen Temperatureintrags zu unerwünschten Verfärbungen an der Oberfläche der umzuformenden Platte kommt.

Gemäß einem weiteren Merkmal der Erfindung ist vorgesehen, dass die Verformung bei einer Linienlast im Bereich von 100 N/mm bis 300 N/mm, vorzugsweise von 170 N/mm bis 250 N/mm, am meisten bevorzugt von 200 N/mm durchgeführt wird. Dabei erfolgt die Verformung unter gleichzeitiger Temperaturzuführung, was dann in schon vorbeschriebener Weise zu einer Verformung der ursprünglich eben ausgebildeten Ausgangsplatte führt.

Zur **Lösung** der vorstehenden Aufgabe wird mit der Erfindung ferner vorgeschlagen ein System zur Herstellung einer dreidimensional verformten Platte aus Holzfaser-Werkstoff nach dem vorbeschriebenen Verfahren, aufweisend
a) eine vorgefertigte, ebene Holzfaser-Werkstoff-Platte als Ausgangsplatte und
b) eine Behandlungsanlage mit
   i) einer Vorwärmstation,
   ii) einer Benetzungseinrichtung und
   iii) einer Formstation, wobei die Formstation ein Walzenpaar mit Walzen aufweist, die jeweils eine in Umfangsrichtung wellenförmig ausgebildete Profilierung der Außenoberfläche bereitstellen, wobei die jeweilige Profilierung über in Umfangsrichtung aufeinander nachfolgende Halbwellen verfügt, die zumindest teilweise eine in Umfangsrichtung unterschiedliche Erstreckung aufweisen.

Ein System der erfindungsgemäßen Art erbringt die schon vorstehend aufgeführten Vorteile. Weiterbildungen des erfindungsgemäßen Systems ergeben sich aus den weiteren Unteransprüchen.

Mit der Erfindung wird des Weiteren eine Sandwichplatte vorgeschlagen, die über eine nach dem erfindungsgemäßen Verfahren hergestellte Wellenplatte verfügt, die zumindest einseitig, vorzugsweise zweiseitig mit einer ebenen Deckschicht verbunden ist.

Weitere Merkmale und Vorteile der Erfindung ergeben sich aus der nachfolgenden Beschreibung anhand der Figuren. Dabei zeigen
- Fig. 1: in schematischer Darstellung eine erfindungsgemäße Verfahrensdurchführung;
- Fig. 2: in schematischer Seitenansicht ein Walzenpaar der erfindungsgemäßen Art;
- Fig. 3: in schematischer Darstellung eine erfindungsgemäße Walzenausgestaltung sowie eine erfindungsgemäß ausgebildete Wellenplatte;
- Fig. 4: in schematischer Darstellung eine erfindungsgemäße Walzenausgestaltung sowie eine erfindungsgemäß ausgebildete Wellenplatte gemäß einer zweiten Ausführungsform;
- Fig. 5: in schematischer Schnittdarstellung eine Sandwichplatte mit einer Wellenplatte gemäß Figur 3 und
- Fig. 6: in schematischer Schnittdarstellung eine Sandwichplatte mit einer Wellenplatte nach Figur 4.

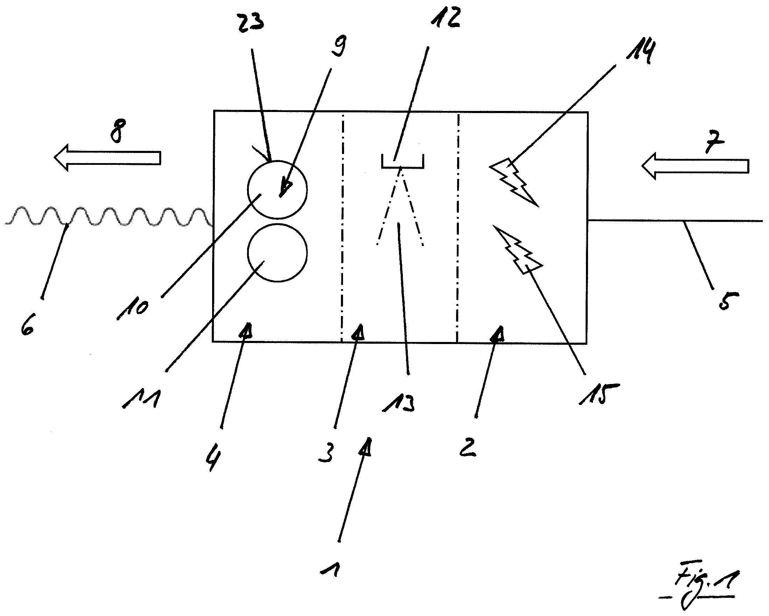

Figur 1 lässt in schematischer Darstellung eine erfindungsgemäße Verfahrensdurchführung bzw. ein erfindungsgemäßes System erkennen.

Es ist eine Behandlungsanlage 1 gezeigt. Diese verfügt über eine Vorwärmstation 2, eine Benetzungseinrichtung 3 und eine Formstation 4.

Die Formstation 4 verfügt ihrerseits über ein Walzenpaar 9. Dieses stellt zwei Walzen 10 und 11 bereit, die unter Ausbildung eines Spalts beabstandet voneinander angeordnet sind. Jede Walze verfügt über eine Außenoberfläche 23, die mit einer im Weiteren noch näher beschriebenen Profilierung ausgerüstet ist.

Die Benetzungseinrichtung 3 stellt eine Sprüheinrichtung 12 bereit. Im bestimmungsgemäßen Verwendungsfall wird über die Sprüheinrichtung 12 ein Flüssigkeitsgemisch aus Wasser und einem Trennmittel versprüht, wobei sich ein beispielhaft eingezeichneter Sprühkegel 13 ergibt. Gemäß der in Figur 1 gezeigten Ausführungsform kommt nur eine Sprüheinrichtung 12 zum Einsatz. Es versteht sich von selbst, dass eine Mehrzahl von derartigen Sprüheinrichtungen zum Einsatz kommen könnte, auch solche, die unterhalb einer durch die Behandlungsanlage 1 hindurchgeführten Platte angeordnet sind.

Die Vorwärmstation 2 verfügt über zwei Heizeinrichtungen 14 und 15. Bei diesen Heizeinrichtungen kann es sich insbesondere um Infrarotstrahler handeln. Aber auch andere Heizeinrichtungen wie zum Beispiel Mikrowellenstrahler oder dergleichen sind denkbar. Entscheidend ist, dass im Zuge der erfindungsgemäßen Verfahrensdurchführung eine Vorwärmung einer Platte erfolgt, die im Weiteren sicherstellt, dass es zu einer homogenen Verteilung eines auf die Platte aufgebrachten Flüssigkeitsgemisches aus Wasser und einem Trennmittel kommt.

Die vorbeschriebene Behandlungsanlage 1 erlaubt eine Verfahrensdurchführung wie folgt.

Der Behandlungsanlage 1 wird in Entsprechung des Pfeils 7 eine Holzfaser-Werkstoff-Platte als Ausgangsplatte aufgegeben. Dabei ist die Holzfaser-Werkstoff-Platte eben ausgebildet und vorgefertigt. Im gezeigten Ausführungsbeispiel ist die vorgefertigte Holzfaser-Werkstoff-Platte eine MDF-Platte 5.

Die MDF-Platte 5 durchläuft in Richtung des Pfeils 7 die Behandlungsanlage 1, wobei abschnittsweise zunächst ein Vorwärmen, alsdann eine Benetzung des vorgewärmten Abschnitts und sodann in der Formstation 4 eine Umformung der Platte 5 stattfindet, sodass sich im Ergebnis eine Wellenplatte 6 einstellt, das heißt eine dreidimensional verformte Platte 6, die die Behandlungsanlage 1 in Richtung des Pfeils 8 verlässt.

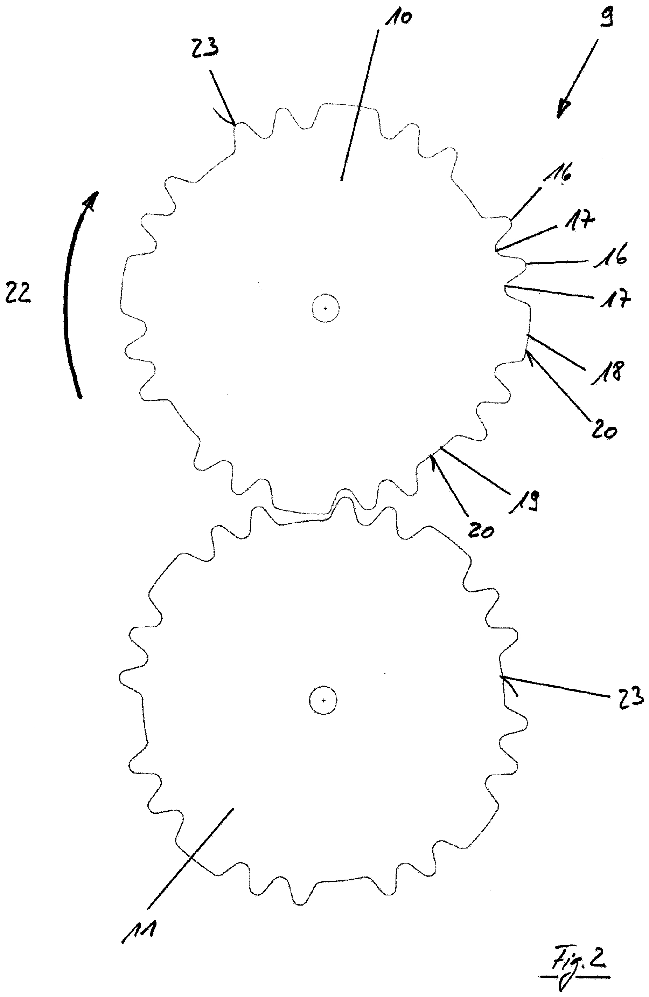

Figur 2 lässt in schematischer Seitenansicht die Walzen 10 und 11 des Walzenpaars 9 der Formstation 4 erkennen. Wie sich aus dieser Darstellung ergibt, weisen die Walzen 10 und 11 jeweils eine Profilierung auf, die über in Umfangsrichtung 22 aufeinander nachfolgende Halbwellen verfügt. Dabei ist eine Halbwelle durch einen Wellenberg oder ein Wellental gebildet, wobei ein Wellenberg eine positive Halbwelle und ein Wellental eine negative Halbwelle darstellt. Mit Bezug auf eine durch den wellenförmigen Verlauf als Nulllinie hindurchgehende Linie stellt ein Wellenberg eine Halbwelle oberhalb der Nulllinie und ein Wellental eine Halbwelle unterhalb der Nulllinie dar.

Wie die Darstellung nach Figur 2 am Beispiel der oberen Walze 10 erkennen lässt, folgt auf eine erste Halbwelle 16 eine zweite Halbwelle 17, eine dritte Halbwelle 16, eine vierte Halbwelle 17, eine fünfte Halbwelle 18 nach usw. Dabei ist von erfindungswesentlicher Bedeutung, dass die Halbwellen zumindest teilweise eine in Umfangsrichtung 22 unterschiedliche Erstreckung aufweisen, wobei im gezeigten Ausführungsbeispiel die Halbwellen 16 und 17 jeweils eine erste Erstreckung bereitstellen, wohingegen die Halbwellen 18 und 19 eine zweite Erstreckung bereitstellt, die in Umfangsrichtung 22 größer ausfällt, als die Erstreckung der Halbwellen 16 und 17. Gemäß dem im Figur 2 gezeigten Wellenmuster folgen auf drei Halbwellen eines ersten Typs, das heißt einer ersten Halbwellenausgestaltung eine Halbwelle eines zweiten Typs, das heißt einer zweiten Halbwellenausgestaltung nach. Im gezeigten Ausführungsbeispiel gehören die Halbwellen 16 und 17 zum ersten Halbwellentyp, wohingegen die Halbwellen 18 und 19 zum zweiten Halbwellentyp gehören. Dabei unterscheiden sich die Halbwellen 16 und 17 des ersten Typs lediglich dadurch, dass die Halbwellen 16 positive Halbwellen sind, wohingegen die Halbwellen 17 negative Halbwellen sind. Das Gleiche ergibt sich bezüglich der Halbwellen des zweiten Typs. Denn hier sind die Halbwellen 18 positive Halbwellen, wohingegen die Halbwellen 19 negative Halbwellen sind.

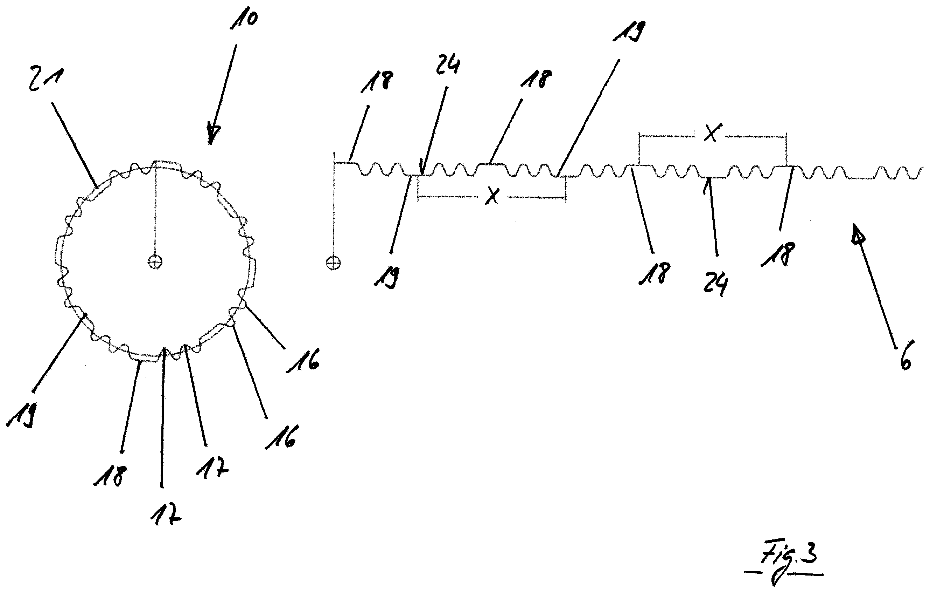

Die in Umfangsrichtung 22 eine längere Erstreckung aufweisenden Halbwellen 18 und 19 stellen jeweils ein im Wesentlichen eben ausgebildetes Plateau 20 bereit. Diese Plateauausbildung erbringt hinsichtlich einer endfertig verformten Platte 6 eine im Wesentlichen plan ausgebildete Anlagefläche 24, wie sich dies aus Figur 3 ergibt.

Wie Figur 3 in einer Zusammenschau erkennen lässt, ist eine Walze mit Bezug auf die Zeichnungsebene links dargestellt, wobei rechts der Walze das sich bezüglich der Platte 6 ergebende Profil abgebildet ist. Wie sich aus dieser Darstellung ergibt, ist das Profil der verformten Platte 6 wellenförmig ausgebildet, wobei die Halbwellen in Längsrichtung der verformten Platte 6 zum Teil eine unterschiedliche Längserstreckung aufweisen. Dabei wechseln sich in Längsrichtung kürzer ausgebildete Halbwellen 16 bzw. 17 mit in Längsrichtung länger ausgebildeten Halbwellen 18 bzw. 19 ab. Es sind insgesamt zwei Wellentypen vorgesehen, und zwar ein erstes Halbwellentypenpaar 16 bzw. 17 und ein zweites Halbwellentypenpaar 18 bzw. 19. Dabei sind die Halbwellen 16 positiv und die Halbwellen 17 negativ ausgebildet. Entsprechendes ergibt sich für den Halbwellentyp 2. Hier sind die Halbwellen 18 positiv und die Halbwellen 19 negativ ausgebildet. Der Abstand zwischen zwei sich wiederholenden Wellen X beträgt im dargestellten Ausführungsbeispiel 303 mm. Auch andere Ausgestaltungen sind hier natürlich denkbar, wobei der Abstand X im gezeigten Ausführungsbeispiel zwischen zwei negativen Halbwellen des Typs 2, im vorliegenden Fall der Halbwelle 19 dargestellt ist.

Die in Figur 3 gezeigte Walze lässt noch die "Nulllinie" 21 erkennen, um die herum die Halbwellen jeweils geführt sind, woraus sich in schon vorbeschriebener Weise Wellenberge, nämlich positive Halbwellen und Wellentäler, das heißt negative Halbwellen ergeben.

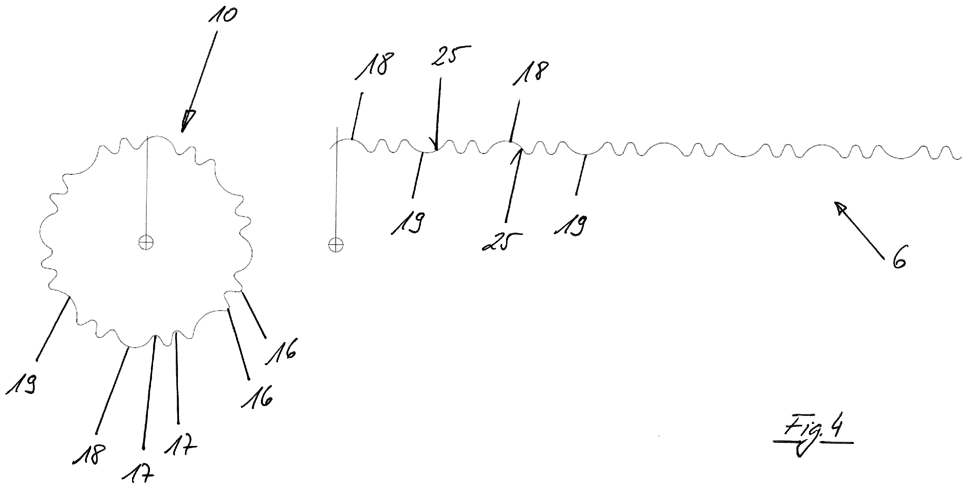

Figur 4 lässt in schematischer Darstellung eine Ausführungsalternative zu Figur 3 erkennen. Wie sich aus dieser Darstellung ergibt, weisen die Halbwellen 18 und 19 gemäß diesem Ausführungsbeispiel kein im Wesentlichen eben ausgebildetes Plateau auf, sondern sind konvex bzw. konkav ausgebildet. Im Ergebnis dieser Ausgestaltung ergibt sich eine endfertig verformte Platte 6, die in Entsprechung der Ausgestaltung der Halbwellen 18 und 19 über im Wesentlichen gekrümmt ausgebildete Anlageflächen 25 verfügt.

Die Ausführungsbeispiele nach den Figuren 3 und 4 dienen nur der Erläuterung und sind nicht beschränkend. Denn die erfindungsgemäße Verfahrensausführung erlaubt nicht nur eine Plattenprofilierung, wie sie in den Figuren 3 und 4 beispielhaft gezeigt ist. Es liegt vielmehr im Rahmen der Erfindung, je nach Anwendungsfall eine entsprechende Profilierung zu wählen. Von erfindungswesentlicher Bedeutung ist allein, dass Halbwellen 16 bzw. 17 einerseits und Halbwellen 18 bzw. 19 andererseits vorgesehen sind, die in Umfangsrichtung der Walzen bzw. in Längsrichtung der späteren Platten unterschiedlich lang ausgebildet sind, das heißt eine unterschiedliche Erstreckung aufweisen. Die je nach Halbwelle vorgesehene halbe Periodendauer unterscheidet sich mithin. Dabei kann je nach späterem Verwendungszweck eine Vielzahl unterschiedlich ausgebildeter Halbwellen vorgesehen sein, ebenso wie die Anordnung dieser Halbwellen. So kann beispielsweise je Walzenumfang ein widerkehrendes Halbwellenmuster vorgesehen sein, was aber nicht zwingend ist. Denkbar ist auch eine Ausgestaltung, bei der sich ein widerkehrendes Halbwellenmuster erst dadurch ergibt, dass die Walzen um mehr als eine 360° Verdrehung verdreht werden.

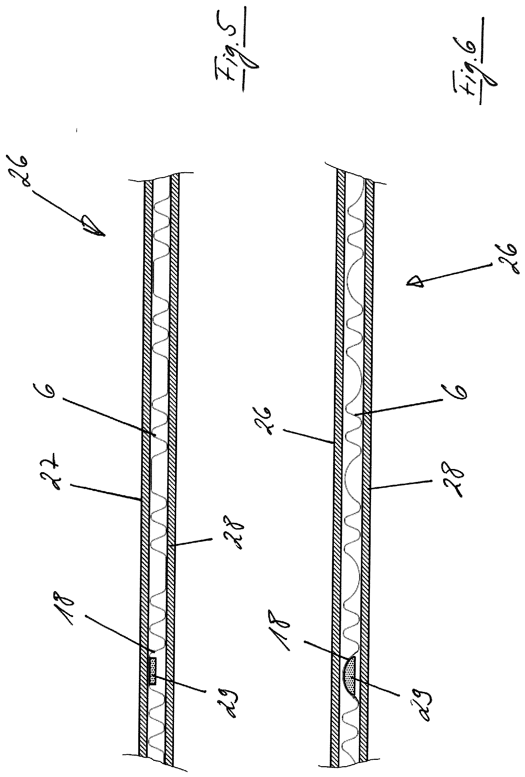

Die Figuren 5 und 6 zeigen schließlich noch exemplarisch zwei Sandwichplatten 26. Dabei verfügt eine jede Sandwichplatte 26 jeweils über eine verformte Platte 6 sowie jeweils über eine erste Deckschicht 27 und eine zweite Deckschicht 28. Die Deckschichten 27 und 28 sind jeweils mit Bezug auf die Zeichnungsebene nach den Figuren 5 und 6 oberseitig und unterseitig der verformten Platte 6 angeordnet, nehmen also die verformte Platte 6 zwischen sich auf.

Gemäß dem Ausführungsbeispiel nach Figur 5 kommt eine verformte Platte 6 zum Einsatz, die derjenigen nach Figur 3 entspricht. Die Ausführungsform nach Figur 6 zeigt indes eine verformte Platte 6 in Entsprechung der Ausführungsform nach Figur 4.

Beispielhaft sind in den Figuren 5 und 6 Funktionselemente 29 gezeigt, die jeweils an der verformten Platte 6 angeordnet sind. Gemäß dem Ausführungsbeispiel nach Figur 5 kommt als Funktionselement 29 eine in Querschnitt im Wesentlichen rechteckförmig ausgebildete Leiste zum Einsatz, die an einer im Wesentlichen eben ausgebildeten Anlagefläche 24 der verformten Platte 6 anliegt.

Im Unterschied hierzu zeigt Figur 6 ein Funktionselement 29, das auf seiner der verformten Platte 6 zugewandten Seite eine Kontur bereitstellt, die der zugehörigen gekrümmten Anlagefläche 25 der verformten Platte 6 entspricht.

### Bezugszeichen

- 1: Behandlungsanlage
- 2: Vorwärmstation
- 3: Benetzungseinrichtung
- 4: Formstation
- 5: MDF-Platte
- 6: dreidimensional verformte Platte
- 7: Pfeil
- 8: Pfeil
- 9: Walzenpaar
- 10: erste Walze
- 11: zweite Walze
- 12: Sprüheinrichtung
- 13: Sprühkegel
- 14: Heizeinrichtung
- 15: Heizeinrichtung
- 16: Halbwelle Typ 1
- 17: Halbwelle Typ 1
- 18: Halbwelle Typ 2
- 19: Halbwelle Typ 2
- 20: Plateau
- 21: Nulllinie
- 22: Umfangsrichtung
- 23: Außenoberfläche
- 24: ebene Anlagefläche
- 25: gekrümmte Anlagefläche
- 26: Sandwichplatte
- 27: erste Deckschicht
- 28: zweite Deckschicht
- 29: Funktionselement

## Patentansprüche

1. Verfahren zur Herstellung einer dreidimensional verformten Platte aus einem Holzfaser-Werkstoff mit folgenden Schritten
- Bereitstellen einer vorgefertigten, ebenen Holzfaser-Werkstoff-Platte als Ausgangsplatte,
- abschnittsweises Vorwärmen der Ausgangsplatte,
- Benetzen eines vorgewärmten Abschnitts der Ausgangsplatte mit einem zerstäubten Flüssigkeitsgemisch aus Wasser und einem Trennmittel,
- Einbringen eines vorgewärmten und mit einem Flüssigkeitsgemisch aus Wasser und einem Trennmittel benetzten Abschnitt der Ausgangsplatte zwischen zwei Walzen (10, 11) einer Formstation (4), wobei die Walzen (10, 11) jeweils eine in Umfangsrichtung (22) wellenförmig ausgebildete Profilierung der Außenoberfläche (23) bereitstellen, sodass die Ausgangsplatte abschnittsweise in eine Platte (6) mit Wellenform umgeformt wird,
**dadurch gekennzeichnet, dass**
Walzen (10, 11) verwendet werden, deren jeweilige Profilierung über in Umfangsrichtung (22) aufeinander nachfolgende Halbwellen (16, 17, 18, 19) verfügt, die zumindest teilweise eine in Umfangsrichtung (22) unterschiedliche Erstreckung aufweisen.

2. Verfahren nach Anspruch 1 bei dem Walzen (10, 11) verwendet werden, deren jeweilige Profilierung über Halbwellen (16, 17, 18, 19) verfügt, die zur Ausbildung einer plattenseitigen im Wesentlichen ebenen Anlagefläche (24) zumindest abschnittsweise im Wesentlichen plan ausgebildet sind.

3. Verfahren nach Anspruch 1, bei dem Walzen (10, 11) verwendet werden, deren jeweilige Profilierung über Halbwellen (16, 17, 18, 19) verfügt, die zur Ausbildung einer plattenseitigen im Wesentlichen gekrümmten Anlagefläche (25) zumindest abschnittsweise im Wesentlichen konkav oder konvex ausgebildet sind.

4. Verfahren nach Anspruch 1 bis 3, bei dem Walzen (10, 11) verwendet werden, deren jeweilige Profilierung über ausschließlich negative oder positive Halbwellen (16, 17, 18, 19) verfügt.

5. Verfahren nach Anspruch 1 bis 3, bei dem Walzen (10, 11) verwendet werden, deren jeweilige Profilierung über in Umfangsrichtung (22) alternierend aufeinander nachfolgende positive und negative Halbwellen (16, 17, 18, 19) verfügt.

6. Verfahren nach Anspruch 5, bei dem Walzen (10, 11) verwendet werden, deren jeweilige Profilierung über zwei unterschiedliche Halbwellenausgestaltungen verfügt, wobei auf drei Halbwellen (16, 17) einer ersten Halbwellenausgestaltung eine Halbwelle (18, 19) einer zweiten Halbwellenausgestaltung nachfolgt.

7. Verfahren nach einem der vorhergehenden Ansprüche, **dadurch gekennzeichnet, dass** eine Holzfaser-Werkstoff-Platte mit einem Flächengewicht von 1,0 kg/m² bis 3,0 kg/m² verwendet wird.

8. Verfahren nach einem der vorhergehenden Ansprüche, **dadurch gekennzeichnet, dass** eine Holzfaser-Werkstoff-Platte mit einer Dicke von 1mm bis 3 mm, vorzugsweise von 2 mm verwendet wird.

9. Verfahren nach einem der vorhergehenden Ansprüche, **dadurch gekennzeichnet, dass** die Verformung bei einer Temperatur im Bereich von 200 °C bis 300 °C, vorzugsweise von 200 °C bis 260 °C, noch mehr bevorzugt von 200 °C bis 240 °C und am meisten bevorzugt von 220 °C durchgeführt wird.

10. Verfahren nach einem der vorhergehenden Ansprüche, **dadurch gekennzeichnet, dass** dieses kontinuierlich durchgeführt wird.

11. Verfahren nach einem der vorhergehenden Ansprüche, **dadurch gekennzeichnet, dass** als ebene Holzfaser-Werkstoff-Platte eine MDF-Platte (5) verwendet wird.

12. System zur Herstellung einer dreidimensional verformten Platte aus Holzfaser-Werkstoff nach dem Verfahren nach einem der vorhergehenden Ansprüche, aufweisend
a) eine vorgefertigte, ebene Holzfaser-Werkstoff-Platte als Ausgangsplatte und
b) eine Behandlungsanlage (1) mit
i) einer Vorwärmstation (2),
ii) einer Benetzungseinrichtung (3) und
iii) einer Formstation (4), wobei die Formstation (4) ein Walzenpaar (9) mit Walzen (10, 11) aufweist, die jeweils eine in Umfangsrichtung (22) wellenförmig ausgebildete Profilierung der Außenoberfläche bereitstellen, wobei die jeweilige Profilierung über in Umfangsrichtung (22) aufeinander nachfolgende Halbwellen (16, 17, 18, 19) verfügt, die zumindest teilweise eine in Umfangsrichtung (22) unterschiedliche Erstreckung aufweisen.

13. System nach Anspruch 12, **dadurch gekennzeichnet, dass** Walzen (10, 11) vorgesehen sind, deren jeweilige Profilierung über Halbwellen (16, 17, 18, 19) verfügt, die zur Ausbildung einer plattenseitigen Anlagefläche (24) zumindest abschnittsweise im Wesentlichen plan ausgebildet sind.

14. System nach Anspruch 12 oder 13, **dadurch gekennzeichnet, dass** Walzen (10, 11) vorgesehen sind, deren jeweilige Profilierung über ausschließlich negative oder positive Halbwellen (16, 17, 18, 19) verfügt.

15. System nach Anspruch 12 oder 13, **dadurch gekennzeichnet, dass** Walzen (10, 11) vorgesehen sind, deren jeweilige Profilierung über in Umfangsrichtung (22) alternierend aufeinander nachfolgende positive und negative Halbwellen (16, 17, 18, 19) verfügt.

16. System nach einem der vorhergehenden Ansprüche 12 bis 15, **dadurch gekennzeichnet, dass** Walzen (9, 10) vorgesehen sind, deren jeweilige Profilierung über zwei unterschiedliche Halbwellenausgestaltungen verfügt, wobei auf drei Halbwellen einer ersten Halbwellenausgestaltung eine Halbwelle einer zweiten Halbwellenausgestaltung nachfolgt.

## Claims

1. Method for producing a three-dimensionally deformed plate from a wood fiber material, the method comprising the following steps:
- providing a prefabricated, flat wood fiber material plate as a starting plate,
- preheating the starting plate in sections,
- wetting a preheated section of the starting plate with an atomized liquid mixture of water and a separating agent,
- inserting a preheated section of the starting plate, which has been wetted with a liquid mixture of water and a separating agent, between two rollers (10, 11) of a forming station (4), wherein the rollers (10, 11) each provide a wave-shaped profiling of the outer surface (23) in the circumferential direction (22), so that the starting plate is transformed in sections into a plate (6) with a wave shape,
**characterized in that**
rollers (10, 11) are used whose respective profiling has half-waves (16, 17, 18, 19) following one another in the circumferential direction (22), which have at least partially different extensions in the circumferential direction (22).

2. Method according to claim 1, wherein rollers (10, 11) are used the respective profiling of which has half-waves (16, 17, 18, 19) which are designed to be essentially flat, at least in sections, in order to form a plate-side, essentially flat contact surface (24).

3. Method according to claim 1, wherein rollers (10, 11) are used the respective profiling of which has half-waves (16, 17, 18, 19) which are designed to form a plate-side, essentially curved contact surface (25) which is essentially concave or convex at least in sections.

4. Method according to claims 1 to 3, wherein rollers (10, 11) are used the respective profiling of which has exclusively negative or positive half-waves (16, 17, 18, 19).

5. Method according to claims 1 to 3, wherein rolls (10, 11) are used the respective profiling of which has positive and negative half-waves (16, 17, 18, 19) successively alternating in the circumferential direction (22).

6. Method according to claim 5, wherein rollers (10, 11) are used the respective profiling of which has two different half-wave designs, wherein three half-waves (16, 17) of a first half-wave design are followed by one half-wave (18, 19) of a second half-wave design.

7. Method according to any of the preceding claims, **characterized in that** a wood fiber material plate with a surface weight of 1.0 kg/m² to 3.0 kg/m² is used.

8. Method according to any of the preceding claims, **characterized in that** a wood fiber material plate with a thickness of 1 mm to 3 mm, preferably 2 mm, is used.

9. Method according to any of the preceding claims, **characterized in that** the deformation is carried out at a temperature in the range of 200°C to 300°C, preferably 200°C to 260°C, more preferably 200°C to 240°C, and most preferably 220°C.

10. Method according to any of the preceding claims, **characterized in that** it is carried out continuously.

11. Method according to any of the preceding claims, **characterized in that** an MDF plate (5) is used as the flat wood fiber material plate.

12. System for producing a three-dimensionally deformed plate made of wood fiber material according to the method according to any of the preceding claims, the system comprising
a) a prefabricated, flat wood fiber material plate as the base plate and
b) a treatment plant (1) with
i) a pre-heating station (2),
ii) a wetting device (3) and
iii) a forming station (4), wherein the forming station (4) comprises a pair of rollers (9) with rollers (10, 11) that each provide a profile of the outer surface that is wave-shaped in the circumferential direction (22), wherein the respective profile has half-waves (16, 17, 18, 19) which follow one another in the circumferential direction (22) and have at least partially different extensions in the circumferential direction (22).

13. System according to claim 12, **characterized in that** rollers (10, 11) are provided, the respective profiling of which has half-waves (16, 17, 18, 19) which are designed to be essentially flat, at least in sections, in order to form a plate-side contact surface (24).

14. System according to claim 12 or 13, **characterized in that** rollers (10, 11) are provided, the respective profiling of which has exclusively negative or positive half-waves (16, 17, 18, 19).

15. System according to claim 12 or 13, **characterized in that** rollers (10, 11) are provided, the respective profiling of which has positive and negative half-waves (16, 17, 18, 19) successively alternating in the circumferential direction (22).

16. System according to any of the preceding claims 12 to 15, **characterized in that** rollers (9, 10) are provided, the respective profiling of which has two different half-wave designs, wherein three half-waves of a first half-wave design are followed by one half-wave of a second half-wave design.

## Revendications

1. Procédé de fabrication d'une plaque déformée tridimensionnelle à partir d'un matériau à base de fibres de bois, le procédé comprenant les étapes suivantes :
- mise à disposition d'une plaque plane préfabriquée en matériau à base de fibres de bois comme plaque de départ,
- préchauffage par sections de la plaque de départ,
- mouillage d'une partie préchauffée de la plaque de départ avec un mélange liquide pulvérisé composé d'eau et d'un agent de séparation,
- introduction d'une partie préchauffée et mouillée avec un mélange liquide composé d'eau et d'un agent de séparation de la plaque de départ entre deux rouleaux (10, 11) d'une station de formage (4), les rouleaux (10, 11) présentant chacun un profil ondulé dans le sens circonférentiel (22) de la surface extérieure (23), de sorte que la plaque de départ est transformée par sections en une plaque (6) de forme ondulée,
**caractérisé en ce que**
on utilise des rouleaux (10, 11) dont le profil respectif comporte des demi-ondulations (16, 17, 18, 19) qui se succèdent dans la direction circonférentielle (22) et qui présentent au moins en partie une extension différente dans la direction circonférentielle (22).

2. Procédé selon la revendication 1, dans lequel on utilise des rouleaux (10, 11) dont le profil respectif comporte des demi-ondulations (16, 17, 18, 19) qui sont réalisées au moins par sections de manière essentiellement plane afin de former une surface d'appui (24) essentiellement plane du côté de la plaque.

3. Procédé selon la revendication 1, dans lequel on utilise des rouleaux (10, 11) dont le profil respectif comporte des demi-ondulations (16, 17, 18, 19) qui sont réalisées au moins par sections de manière essentiellement concave ou convexe pour former une surface d'appui (25) essentiellement courbe du côté de la plaque.

4. Procédé selon les revendications 1 à 3, dans lequel on utilise des rouleaux (10, 11) dont le profil respectif comporte exclusivement des demi-ondulations négatives ou positives (16, 17, 18, 19).

5. Procédé selon les revendications 1 à 3, dans lequel on utilise des rouleaux (10, 11) dont le profil respectif présente des demi-ondes positives et négatives (16, 17, 18, 19) qui se succèdent en alternance dans le sens circonférentiel (22).

6. Procédé selon la revendication 5, dans lequel on utilise des rouleaux (10, 11) dont le profil respectif présente deux configurations de demi-ondes différentes, une demi-onde (18, 19) d'une deuxième configuration de demi-ondes succédant à trois demi-ondes (16, 17) d'une première configuration de demi-ondes.

7. Procédé selon l'une quelconque des revendications précédentes, **caractérisé en ce qu'**une plaque en matériau à base de fibres de bois d'un poids surfacique compris entre 1,0 kg/m2 et 3,0 kg/m2 est utilisé.

8. Procédé selon l'une quelconque des revendications précédentes, **caractérisé en ce qu'**une plaque en matériau à base de fibres de bois d'une épaisseur comprise entre 1 mm et 3 mm, de préférence de 2 mm, est utilisé.

9. Procédé selon l'une quelconque des revendications précédentes, **caractérisé en ce que** la déformation est effectuée à une température comprise entre 200 °C et 300 °C, de préférence entre 200 °C et 260 °C, plus préférablement entre 200 °C et 240 °C et de manière particulièrement préférable entre 220 °C et 240 °C.

10. Procédé selon l'une quelconque des revendications précédentes, **caractérisé en ce qu'**il est effectué en continu.

11. Procédé selon l'une quelconque des revendications précédentes, **caractérisé en ce qu'**une plaque MDF (5) est utilisé comme plaque plate en matériau à fibres de bois.

12. Système pour la fabrication d'une plaque déformée tridimensionnelle à partir d'un matériau à base de fibres de bois selon le procédé selon l'une quelconque des revendications précédentes, le système comprenant
a) un panneau plat préfabriqué en matériau à base de fibres de bois comme panneau de départ et
b) une installation de traitement (1) avec
i) une station de préchauffage (2),
ii) un dispositif d'humidification (3) et
iii) une station de formage (4), la station de formage (4) comportant une paire de rouleaux (9) avec des rouleaux (10, 11) qui présentent chacun un profil ondulé dans le sens circonférentiel (22) de la surface extérieure, le profil respectif étant formé par des demi-ondulations (16, 17, 18, 19) qui présentent au moins en partie une extension différente dans la direction circonférentielle (22).

13. Système selon la revendication 12, **caractérisé en ce que** des rouleaux (10, 11) sont prévus, dont le profilage respectif comporte des demi-ondulations (16, 17, 18, 19) qui sont réalisées de manière essentiellement plane, au moins par sections, pour former une surface d'appui (24) côté plaque.

14. Système selon la revendication 12 ou 13, **caractérisé en ce que** des rouleaux (10, 11) sont prévus, dont le profil respectif comporte exclusivement des demi-ondes négatives ou positives (16, 17, 18, 19).

15. Système selon la revendication 12 ou 13, **caractérisé en ce que** des rouleaux (10, 11) sont prévus, dont le profil respectif comporte des demi-ondes positives et négatives (16, 17, 18, 19) se succèdent en alternance dans le sens circonférentiel (22).

16. Système selon l'une des revendications précédentes 12 à 15, **caractérisé en ce que** des rouleaux (9, 10) sont prévus, dont le profil respectif comporte deux configurations de demi-ondes différentes, une demi-onde d'une deuxième configuration de demi-ondes succédant à trois demi-ondes d'une première configuration de demi-ondes.
